# EUROPÄISCHE PATENTSCHRIFT

(11) **EP 1 253 405 B1**
(45) Veröffentlichungstag und Bekanntmachung des Hinweises auf die Patenterteilung: **09.10.2013**
(21) Anmeldenummer: 02008459.6
(22) Anmeldetag: 13.04.2002
(51) Int. Cl.: G01D 5/39, B25J 15/08, B25J 9/16

(54) **Greifersystem umfassend ein Sensorsystem**
Gripper system comprising a sensor system
Système de préhension avec système de détection

(30) Priorität: 23.04.2001 DE 10120948
(43) Veröffentlichungstag der Anmeldung: 30.10.2002
(73) Patentinhaber: Schunk GmbH & Co. KG Spann- und Greiftechnik, 74348 Lauffen (DE)
(72) Erfinder: Fellhauer, Bruno, 74336 Brackenheim (DE)
(74) Vertreter: Dreiss

(56) Entgegenhaltungen:
- EP-A- 0 351 961
- WO-A-01/16661
- DE-A- 3 612 144

## Beschreibung

Die Erfindung betrifft ein Greifersystem umfassend eine Greifvorrichtung, ein Sensorsystem und eine Datenübertragungsverbindung vom Sensorsystem zu einer Fernabfrage- und Fernsteuerungseinheit. Das Sensorsystem weist einen insbesondere an einer Greifvorrichtung anordenbaren Positionsmesssensor und eine mit dem Messsensor verbundene Auswerteelektronikeinheit auf, wobei die Auswerteelektronikeinheit eine erste Schnittstelle zu dem Messsensor, eine zweite Schnittstelle zu einer Maschinensteuerung und Mittel zum Programmieren der Auswerteelektronikeinheit aufweist. Über ein derartiges Sensorsystem kann insbesondere die Hubposition von verfahrbaren Greiferbacken einer Greifvorrichtung erfasst werden. Die Auswerteelektronikeinheit wertet die von dem Messsensor erfassten Daten aus und leitet sie über die zweite Schnittstelle einer Maschinensteuerung zu. Die Maschinensteuerung steuert u.a. aufgrund der von der Auswerteelektronikeinheit an die Maschinensteuerung übermittelten Daten die Greifvorrichtung. Damit liegt ein geschlossener Steuerkreis vor.

Zum Programmieren der Auswerteelektronikeinheit werden die Greiferbacken in vorgegebene Positionen verfahren. Eine vorgegebene Position wird im Teaching-Verfahren über entsprechende Mittel der Auswerteelektronikeinheit gespeichert. Zu einem späteren Zeitpunkt kann eine derart programmierte bzw. gespeicherte Position der Greiferbacken über die Maschinensteuerung abgefragt werden. Vorteilhafterweise können mehrere Positionen auf die beschriebene Art und Weise programmiert werden.

Derart bekannte Sensorsysteme werden von der Firma Schunk GmbH & Co. KG, 74348 Lauffen/Neckar vertrieben und sind aus Zubehörkatalogen (Schunk GmbH & Co. KG, Katalog: Zubehör Greifersysteme, 02/2001, Auswerteelektronikeinheit FPS mit Messsensoren) bekannt.

Aufgrund der relativ schwachen Messsignale der an der Greifvorrichtung angeordneten Positionssensoren, die über eine elektrische Leitung mit der Auswerteelektronikeinheit verbunden sind, kann die Verbindungsleitung zwischen den Positionssensoren und der Auswerteelektronikeinheit nicht beliebig lang sein. In der Praxis beträgt die maximale Länge ca. 1 bis 1,5 m. Da die Positionssensoren unmittelbar an der Greifvorrichtung angeordnet sein müssen, wobei die Greifvorrichtung ihrerseits regelmäßig an einem Handhabungsgerät bzw. an einem Roboterarm angeordnet ist, können Mittel zur Verstärkung der Messsignale nicht bzw. nur mit einem sehr hohen Aufwand vorgesehen werden. Aufgrund des relativ geringen Abstands der Auswerteelektronikeinheit zu der Greifvorrichtung kann sich die Programmierung der Auswerteelektronikeinheit insbesondere bei unzugänglichen Greifvorrichtungen sehr mühsam gestalten.

Ein weiterer Nachteil des bekannten Standes der Technik ist, dass eine Kontrolle der Auswerteelektronikeinheit, insbesondere bei Ausfall der Auswerteelektronikeinheit nur vor Ort möglich ist. Insbesondere bei unzugänglich angeordneten Greifvorrichtungen bzw. Auswerteelektronikeinheiten führt dies zu relativ langen Stillstandzeiten der Greifvorrichtung.

Aus der WO01/1666 ist bekannt geworden, dass eine Maschinensteuerung mit Sensorsystemen verbunden ist und in Abhängigkeit von den Messwerten der Sensorsysteme Regelventile steuert. Die Maschinensteuerung ist dabei über eine Fernleitung fernabfragbar. Durch einen Ferneingriff in die Maschinensteuerung können unerwünschte Änderungen oder Manipulationen der Betriebssoftware auftreten.

Dokument DE3612144 offenbart ein Greifersystem umfassend eine Greifvorrichtung, ein Sensorsystem und eine Datenübertragungsverbindung vom Sensorsystem zu einer Fernabfrage- und Fernsteuerungseinheit, wobei das Sensorsystem einen an der Greifvorrichtung anordenbaren Positionssensor und eine mit dem Positionssensor verbundene, die vom Positionssensor erfassten Daten auswertende Auswerteelektronikeinheit aufweist, wobei die Auswerteelektronikeinheit eine erste Schnittstelle zu dem Positionssensor und eine zweite Schnittstelle zur Zuleitung der ausgewerteten Daten zu einer Maschinensteuerung und zum Abfragen der programmierten Sollpositionen durch die Maschinensteuerung aufweist.

Der vorliegenden Erfindung liegt die Aufgabe zugrunde, den Nachteilen des bekannten Standes der Technik abzuhelfen. Insbesondere soll eine Kontrolle der Auswerteelektronikeinheit auch bei unzugänglich angeordneten Auswerteelektronikeinheiten ermöglicht werden.

Diese Aufgabe wird bei einem Greifersystem mit den Merkmalen des Anspruchs 1 gelöst.

Dieses Greifersystem hat den Vorteil, dass die von dem Sensorsystem erfassten Daten fern abgefragt werden können.

Außerdem kann auf die Auswerteelektronikeinheit ferngesteuert zugegriffen werden, so dass ebenfalls die Programmierung der Auswerteelektronikeinheit nicht vor Ort, sondern von der Ferne durchgeführt werden kann. Dabei sind an der Auswerteelektronikeinheit zwei dritte Schnittstellen vorhanden, wobei die eine dritte Schnittstelle eine separat ausgebildete Schnittstelle und die andere dritte Schnittstelle als Teil der zweiten Schnittstelle ausgebildet ist. Dies hat den Vorteil, dass zwei unabhängige Fernabfrage- und Steuerungseinheiten über Datenübertragungsverbindungen mit der Auswerteelektronikeinheit verbindbar sind. Die eine Fernabfrage- und Fernsteuerungseinheit ist vorteilhafterweise über die in der zweiten Schnittstelle vorhandene dritte Schnittstelle fortwährend über die Datenübertragungsverbindung mit der Auswerteelektronikeinheit verbindbar. Die andere Fernabfrage- und Fernsteuerungseinheit kann im Bedarfsfall vor Ort über die separat ausgebildete dritte Schnittstelle mit der Auswerteelektronikeinheit zur Vor-Ort-Diagnose verbunden werden. Ein derartiger Bedarf kann beispielsweise bei Ausfall oder Störung der Auswerteelektronikeinheit vorliegen.

Vorteilhafterweise ist die eine dritte Schnittstelle der Auswerteelektronikeinheit als Buchsen- und/oder Steckereinheit ausgebildet. Derartige Schnittstellen haben den Vorteil, dass sie sehr klein bauen und eine funktionssichere Kontaktierung gewährleisten. Die Schnittstellen sind ebenfalls auf einfache Art und weise gegen Umwelteinflüsse schützbar. Die eine dritte Schnittstelle kann beispielsweise als extra Steckerleiste ausgeführt sein.

Erfindungsgemäß ist vorgesehen, dass die andere dritte Schnittstelle der Auswerteelektronikeinheit als Teil der zweiten, zu der Maschinensteuerung führenden Schnittstelle ausgebildet ist. Dies hat den Vorteil, dass keine separate, zusätzliche Schnittstelle erforderlich ist. Regelmäßig ist die zweite Schnittstelle als mehrpolige Steckerverbindung zu der Maschinensteuerung ausgeführt. Vorteilhafterweise werden mindestens zwei Pole bzw. Pins der zweiten Schnittstelle zur Verbindung der Fernabfrage- und Fernsteuerungseinheit als dritte Schnittstelle - innerhalb der zweiten Schnittstelle - ausgebildet. Dies hat den Vorteil, dass ein zusätzlicher Kabelstrang zu der Auswerteelektronikeinheit nicht erforderlich ist. Das äußere Erscheinungsbild der bekannten Auswerteelektronikeinheit verändert sich hierdurch nicht.

Bei einer weiteren Ausführungsform der Erfindung ist vorgesehen, dass die als Teil der zweiten Schnittstelle ausgebildete Schnittstelle über eine Telekommunikationsverbindung, die analog und/oder digital ausgeführt sein kann, mit der Fernabfrage- und Steuerungseinheit verbindbar ist. Damit kann das Sensorsystem beispielsweise über ein Intranet oder über das Internet fernabgefragt und ferngesteuert werden. Hierdurch können insbesondere bei einem Aus- oder Störfall des Sensorsystems Stillstandzeiten verkürzt werden. Außerdem entfallen Reisekosten für Service- und Reparaturfachkräfte.

Bei einer anderen Ausführungsform der Erfindung ist vorgesehen, dass die Auswerteelektronikeinheit bei Überschreiten von vorgegebenen Grenzwerten ihren Betriebszustand aufzeichnet. Grenzwerte können hierbei insbesondere eine kritische Temperatur oder eine kritischer Betriebsspannungswert sein. Zur Aufzeichnung ist eine Speichereinheit innerhalb der Auswerteelektronikeinheit vorgesehen. Hierdurch kann erreicht werden, dass eine Diagnose bei auftretenden Fehlern aufgrund der Aufzeichnungen ermöglicht wird.

Das erfindungsgemäße Greifersystem hat insbesondere den Vorteil, dass der geschlossene Steuer- bzw. Regelkreis über eine Fernabfrage- und Fernsteuerungseinheit, die mit der Auswerteelektronikeinheit über deren dritte Schnittstelle verbindbar ist, fernabfragbar und fernsteuerbar ist.

Da an sich über die zweite Schnittstelle der Auswerteelektronikeinheit eine Verbindung zu der Maschinensteuerung vorgesehen ist, kann mit relativ wenig zusätzlichem Aufwand die Auswerteelektronikeinheit über die Maschinensteuerung mit der Fernabfrage- und Fernsteuereinheit verbunden werden.

Über die andere dritte Schnittstelle erfolgt die Datenübertragungsverbindung durch die Maschinensteuerung, ohne dass die Maschinensteuerung die übertragenen Daten zur Steuerung der Greifvorrichtung verarbeitet. Die Maschinensteuerung dient hierbei lediglich als verbindendes Element zwischen der Auswerteelektronikeinheit und der Fernabfrage- und Fernsteuerungseinheit. Dies hat insbesondere den Vorteil, dass bei einer Fernabfrage und Fernsteuerung der Auswerteelektronikeinheit keine Gefahr besteht, dass eine Veränderung bzw. Umprogrammierung der Maschinensteuerung erfolgen kann. Hierdurch wird gewährleistet, dass die Maschinensteuerung durch die Fernabfrage und Fernsteuerung nicht manipuliert werden kann.

Eine weitere, vorteilhafte Ausgestaltung der Erfindung zeichnet sich dadurch aus, dass die Auswerteelektronikeinheit und/oder die Fernabfrage- und Fernsteuerungseinheit bei Überschreiten von vorgegebenen Grenzwerten den Betriebszustand der Auswerteelektronikeinheit aufzeichnet. Hierdurch wird die Fehlerdiagnose bei Ausfall der Auswerteelektronikeinheit optimiert.

Weiterhin kann erfindungsgemäß vorgesehen sein, dass über die Fernabfrage- und Fernsteuerungseinheit Abfrage- und/oder Steuerungswerte in einer Längeneinheit abfragbar bzw. eingebbar sind. Grundsätzlich werden die Ausgangssignale der Positionssensoren in V bzw. A geliefert. Nach einer einmalig vorzunehmenden Kalibrierung des Systems werden die erfassten Messwerte von der Fernabfrage- und Fernsteuerungseinheit in benutzerfreundliche Längeneinheiten, insbesondere in mm-Hubweg der Greiferbacken umgerechnet und angezeigt. Hierdurch wird die Benutzerfreundlichkeit des Greifersystems erheblich verbessert.

Über die Fernabfrage- und Fernsteuerungseinheit können auch vorgegebene Positionen der Greifvorrichtung bzw. deren Greiferbacken programmiert werden, ohne das Teaching-Verfahren anwenden zu müssen. Vorteilhafterweise werden die anzufahrenden Sollpositionen der Greiferbacken der Greifvorrichtung in bekannten Längeneinheiten, insbesondere in mm, über die Fernabfrage- und Fernsteuerungseinheit programmiert.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

Es zeigen:
- Figur 1: und
Figur 2 die Auswerteelektronikeinheit eines Sensorsystems in verschiedenen perspektivischen Ansichten; und
Figur 3 eine schematische Darstellung eines Greifersystems.

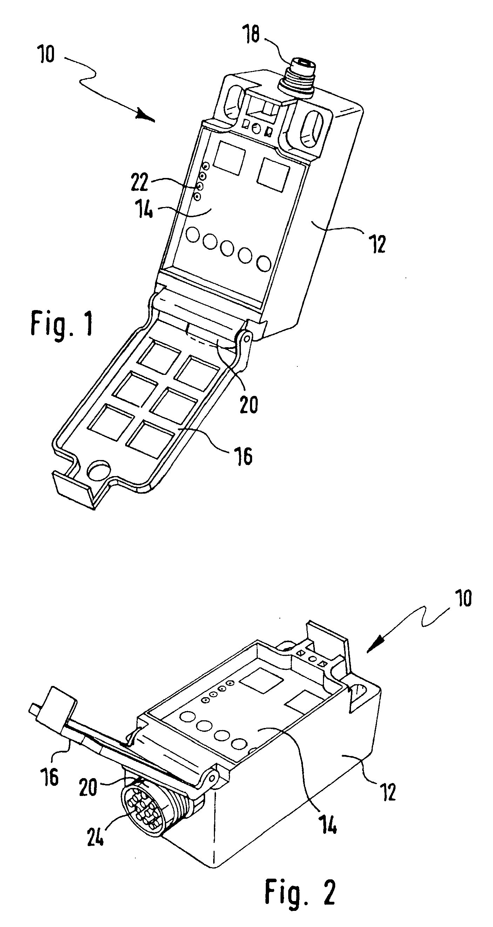

Die in Figur 1 dargestellte Auswerteelektronikeinheit 10 weist ein Gehäuse 12 auf, das an seiner Oberseite 14 verschiedene Betätigungstasten zur Programmierung der Auswerteelektronikeinheit 10 aufweist. Die Oberseite 14 ist mittels eines an dem Gehäuse 12 schwenkbar angeordneten Abdeckelements 16 abdeckbar.

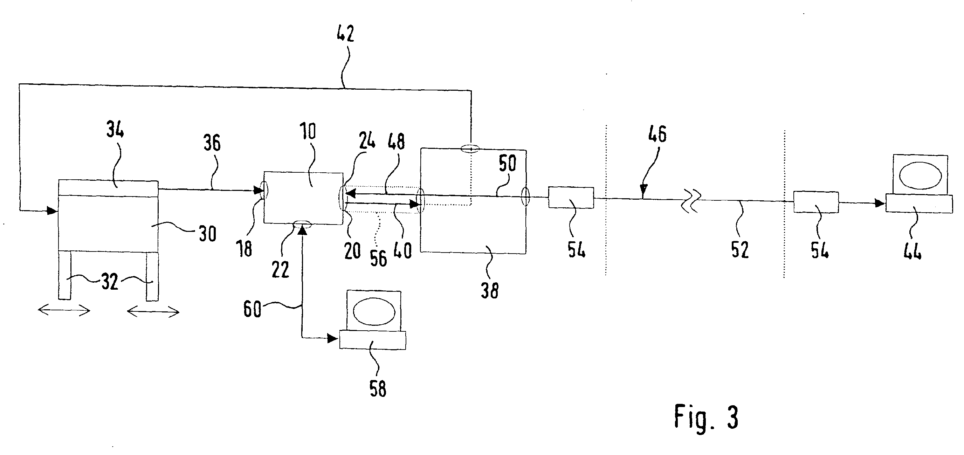

Die Auswerteelektronikeinheit 10 weist eine erste Schnittstelle 18 zur Verbindung mit einem an insbesondere einer Greifervorrichtung anordenbaren, in Figur 3 dargestellten, Sensor auf. Ferner sieht die Auswerteelektronikeinheit 10 eine zweite Schnittstelle 20 zu einer Maschinensteuerung vor.

Erfindungsgemäß weist die Auswerteelektronikeinheit 10 zwei dritte Schnittstellen 22 und 24 auf. Die dritte Schnittstelle 22 ist als separat ausgebildete Schnittstelle in Form einer Steckerleiste an der abdeckbaren Oberseite 14 des Gehäuses 12 angeordnet. Die weitere dritte Schnittstelle 24 ist als Teil der zweiten Schnittstelle 20 ausgebildet. Die zweite Schnittstelle 20 ist als Steckereinheit ausgeführt, die eine Vielzahl von in Fig. 2 dargestellten Pins aufweist. Bei der in den Figuren dargestellten Ausführungsform bilden zwei Pins der Steckereinheit der Schnittstelle 20 die weitere dritte Schnittstelle 24.

Die beiden dritten Schnittstellen 22 und 24 sind über jeweils getrennte Datenübertragungsverbindungen mit einer Fernabfrage- und Fernsteuerungseinheit verbindbar. Vorteilhafterweise wird die Schnittstelle 22 lediglich im Bedarfsfalle vor Ort verwendet. Die Schnittstelle 24 ist vorteilhafterweise zusammen mit der Schnittstelle 20 über einen gemeinsamen Kabelstrang mit einer Maschinensteuerung verbindbar.

In Figur 3 ist die Auswerteelektronikeinheit 10 gemäß Figur 1 und 2 als ein Teil eines Greifersystems dargestellt. Das Greifersystem umfasst eine Greifvorrichtung 30 mit zwei verfahrbaren Fingern 32. Die Finger sind an der Greifvorrichtung verschieblich oder verschwenkbar gelagerten Grundbacken angeordnet. An der Greifvorrichtung 30 ist ein Messsensor 34, insbesondere ein Positionsmesssensor angeordnet, der über eine elektrische Leitung 36 mit der Schnittstelle 18 der Auswerteelektronikeinheit 10 verbunden ist. Über die Leitung 36 werden lediglich Daten in Richtung von dem Messsensor 34 zu der Auswerteelektronikeinheit 10 übertragen. Der Messsensor 34, die Leitung 36 und die Auswerteelektronikeinheit 10 bilden ein Sensorsystem.

Das Greifersystem umfasst ferner eine Maschinensteuerung 38, die über die Schnittstelle 20 und eine elektrische Leitung 40 mit der Auswerteelektronikeinheit 10 verbunden ist. Über die Leitung 40 werden die von der Auswerteelektronikeinheit 10 erfassten Daten des Messsensors 34 der Maschinensteuerung 38 zugeführt. Die Daten werden innerhalb der Maschinensteuerung 38 verarbeitet. Aufgrund der verarbeiteten Daten steuert die Maschinensteuerung 38 über die Steuerleitung 42 den nicht dargestellten Antrieb der Greifvorrichtung 30. Die Messvorrichtung 34, die Leitung 36, die Auswerteelektronikeinheit 10, die Leitung 40, die Maschinensteuerung 38 sowie die Leitung 42 bilden demnach einen geschlossenen Steuerkreis.

Das in Figur 3 gezeigte Greifersystem weist außerdem eine Fernabfrage- und Fernsteuerungseinheit in Form einer Computereinheit 44 auf. Die Computereinheit 44 ist über eine Datenübertragungsverbindung 46 mit der Schnittstelle 24 der Auswerteelektronikeinheit 10 verbunden. Die Datenübertragungsverbindung 46 setzt sich aus verschiedenen Abschnitten zusammen. Der erste Abschnitt 48 schließt sich unmittelbar an die Schnittstelle 24 an und verbindet die Auswerteelektronikeinheit 10 mit der Maschinensteuerung 38. Ein sich an den ersten Abschnitt 48 anschließender weiterer Abschnitt 50 verläuft innerhalb der Maschinensteuerung 38. An diesen Abschnitt 50 schließt sich eine Telekommunikationsverbindung 52 an, die zu der Computereinheit 44 führt. Die Telekommunikationsverbindung 52 kann hierbei eine beliebige Länge aufweisen. Je nach Art der Telekommunikationsverbindung 52 (digital/analog) sind in der Telekommunikationsverbindung 52 bzw. der Telekommunikationsverbindung 52 vor- und nachgeschaltete elektronische Bauteile 54, wie beispielsweise Modulierer, Wandler oder Verstärker vorzusehen.

Wie aus Figur 3 deutlich wird, wird von der Maschinensteuerung 38 vorzugsweise nicht auf den Verbindungsabschnitt 52 zur Steuerung der Greifvorrichtung 30 zurückgegriffen. Der Verbindungsabschnitt 52 durchquert lediglich die Maschinensteuerung 38. Dies hat den Vorteil, dass eine Manipulation der Maschinensteuerung 38 durch die Computereinheit 44 ausgeschlossen ist. Mit der Computereinheit 44 kann folglich lediglich auf die Auswerteelektronikeinheit 10 zur Fernabfrage und Fernsteuerung zurückgegriffen werden und nicht - zumindest nicht unmittelbar - auf die Maschinensteuerung 38. Über die Datenübertragungsverbindung 46 können Daten in beide Richtungen übertragen werden.

Aus Figur 3 wird ebenfalls deutlich, dass die beiden Leitungen 48 und 40 innerhalb eines gemeinsamen Kabelstranges 56 der Maschinensteuerung 38 zugeführt werden.

Über die Computereinheit 44 kann die Auswerteelektronikeinheit 10 programmiert, überwacht und gesteuert werden. Beispielsweise können mehrere Anfahrpositionen der Finger 32 der Greifvorrichtung 30 über die Computereinheit 44 programmiert werden. Über die Computereinheit 44 kann ebenfalls eine Fernwartung und Ferndiagnose der Auswerteelektronikeinheit 10 vorgenommen werden. Außerdem kann eine Prozessüberwachung des Greifvorganges der Greifvorrichtung 30 erfolgen, die es insbesondere erlaubt, auftretende Fehler zu analysieren.

Ferner kann erfindungsgemäß vorgesehen sein, dass die Auswerteelektronikeinheit 10 bei Überschreiten von bestimmten Grenzwerten eine präventive Fehlermeldung an die Computereinheit 44 abgibt. Derartige Grenzwerte können beispielsweise kritische Temperaturen oder kritische Betriebsspannungen sein.

Die Computereinheit 44 kann außerdem Oszilloskop-Funktionen beinhalten, mit welchen auftretende Störungen schnell erkannt werden können. Vorteilhafterweise können über die Computereinheit 44 Abfrage- und/oder Steuerungswerte in einer Längeneinheit, insbesondere in mm, abgefragt und eingegeben werden.

Über die Schnittstelle 22 kann im Bedarfsfall temporär eine weitere Fernabfrage- und Fernsteuerungseinheit in Form eines weiteren Computers 58 mit der Auswerteelektronikeinheit 10 über eine elektrische Leitung 60 verbunden werden. Die Computereinheit 58 beinhaltet die gleichen Funktionen wie die Computereinheit 44. Insbesondere können alle wesentlichen Abfrage- und Steuerungswerte mit der Computereinheit 58 abgefragt und eingegeben werden sowie die Auswerteelektronikeinheit 10 überwacht und programmiert werden.

## Patentansprüche

1. Greifersystem umfassend eine Greifvorrichtung (30), ein Sensorsystem und eine Datenübertragungsverbindung (46, 60) vom Sensorsystem zu einer Fernabfrage- und Fernsteuerungseinheit (44, 58),
wobei das Sensorsystem einen an der Greifvorrichtung (30) anordenbaren Positionssensor (34) und eine mit dem Positionssensor (34) verbundene, die vom Positionssensor erfassten Daten auswertende Auswerteelektronikeinheit (10) aufweist,
wobei die Auswerteelektronikeinheit (10) aufweist:
- Mittel eingerichtet zum Programmieren der Auswerteelektronikeinheit (10) mit anzufahrenden Sollpositionen von Greiferbacken der Greifvorrichtung,
- eine erste Schnittstelle (18) zu dem Positionssensor (34),
- eine zweite Schnittstelle (20) zur Zuleitung der ausgewerteten Daten zu einer Maschinensteuerung (38) und zum Abfragen der programmierten Sollpositionen durch die Maschinensteuerung (38) und
- zwei dritte Schnittstellen (22, 24) für die Datenübertragungsverbindung (46, 60) zur Fernabfrage- und Fernsteuerungseinheit (44, 58),
wobei die eine dritte Schnittstelle (22) eine separate ausgebildete Schnittstelle und die andere dritte Schnittstelle (24) als Teil der zweiten Schnittstelle (20) ausgebildet ist,
wobei über die dritten Schnittstellen (22, 24) zum einen die vom Positionssensor (34) erfassten Daten fern abgefragt und zum anderen auf die Auswerteelektronikeinheit (10) ferngesteuert derart zugegriffen werden kann, dass die Programmierung der Auswerteelektronikeinheit (10) von der Ferne durchgeführt werden kann,
wobei die Datenübertragungsverbindung (46) über die andere dritte Schnittstelle (24) durch die Maschinensteuerung (38) so erfolgt, dass die Maschinensteuerung (38) die übertragenen Daten zur Steuerung der Greifvorrichtung (30) derart verarbeitet, dass keine Veränderung bzw. Umprogrammierung der Maschinensteuerung (38) durch die Fernabfrage und Fernsteuerung erfolgen kann.

2. Greifersystem nach Anspruch 1, **dadurch gekennzeichnet, dass** die dritte Schnittstelle der Auswerteelektronikeinheit (10) als Buchsen- und/oder Steckereinheit ausgebildet ist.

3. Greifersystem nach einem der vorhergehenden Ansprüche, **dadurch gekennzeichnet, dass** die als Teil der zweiten Schnittstelle (20) ausgebildete dritte Schnittstelle (24) der Auswerteelektronikeinheit (10) über eine Telekommunikationsverbindung (46) mit der Fernabfrage- und Fernsteuerungseinheit (44, 58) verbindbar ist.

4. Greifersystem nach einem der vorhergehenden Ansprüche, **dadurch gekennzeichnet, dass** die Auswerteelektronikeinheit (10) und/oder die Fernabfrage- und Fernsteuerungseinheit (44, 58) bei Überschreiten von vorgegebenen Grenzwerten den Betriebszustand der Auswerteelektronikeinheit (10) aufzeichnet.

5. Greifersystem nach einem der vorhergehenden Ansprüche, **dadurch gekennzeichnet, dass** über die Fernabfrage- und Fernsteuerungseinheit (44, 58) Abfrage- und/oder Steuerungswerte in einer Längeneinheit abfragbar bzw. eingebbar sind.

## Claims

1. Gripper system comprising a gripping arrangement (30), a sensor system and a data-transmitting connection (46, 60) from the sensor system to a remote interrogation and remote control unit (44, 58), the sensor system having a position sensor (34) able to be arranged on the gripping arrangement (30) and an electronic analysing unit (10) which is connected to the position sensor (34) and which analyses the data sensed by the position sensor, wherein the electronic analysing unit (10) has:
- means adapted to programme the electronic analysing unit (10) with desired positions to be moved to by gripping jaws of the gripping arrangement,
- a first interface (18) with the position sensor (34),
- a second interface (20) for feeding the analysed data to a machine control system (38) and for the interrogation of the programmed desired positions by the machine control system (38) and
- two third interfaces (22, 24) for the data-transmitting connection (46, 60) to the remote interrogation and remote control unit (44, 58),
wherein one third interface (22) takes the form of a separately formed interface and the other third interface (24) takes the form of part of the second interface (20),
wherein, via the third interfaces (22, 24), on the one hand the data sensed by the position sensor (34) can be remotely interrogated and on the other hand the electronic analysing unit (10) can be accessed by remote control in such a way that programming of the electronic analysing unit (10) can be carried out remotely,
wherein, via the other third interface (24), the data-transmitting connection (46) is made through the machine control system (38) in such a way that the machine control system (38) processes the transmitted data for controlling the gripping arrangement (30) in such a way that no change to or re-programming of the machine control system (38) can take place as a result of the remote interrogation or remote control.

2. Gripper system according to claim 1, **characterised in that** the third interface of the electronic analysing unit (10) takes the form of a plug and/or socket unit.

3. Gripper system according to either of the preceding claims, **characterised in that** the third interface (24) of the electronic analysing unit (10) which takes the form of part of the second interface (20) can be connected to the remote interrogation and remote control unit (44, 58) via a telecommunications connection (46).

4. Gripper system according to one of the preceding claims, **characterised in that** the electronic analysing unit (10) and/or the remote interrogation and remote control unit (44, 58) record the state of operation of the electronic analysing unit (10) if preset limiting values are exceeded.

5. Gripper system according to one of the preceding claims, **characterised in that** interrogated and/or controlling values in a unit of length can be respectively interrogated and entered via the remote interrogation and remote control unit (44, 58)

## Revendications

1. Système de préhension comprenant un dispositif de préhension (30), un système de capteur et une connexion de transmission de données (46, 60) depuis le système de capteur jusqu'à une unité d'interrogation et de commande à distance (44, 58), le système de capteur présentant un capteur de position (34) pouvant être agencé au niveau du dispositif de préhension (30) et une unité électronique d'exploitation (10) reliée au capteur de position (34) et interprétant les données enregistrées par le capteur de position, dans lequel l'unité électronique d'exploitation (10) présente :
- des moyens conçus pour programmer l'unité électronique d'exploitation (10) avec des positions de consigne des mâchoires du dispositif de préhension,
- une première interface (18) pour le capteur de position (34) ;
- une deuxième interface (20) pour amener les données analysées vers une commande de machine (38) et pour interroger les positions de consigne programmées par le biais de la commande de machine (38) et
- deux troisièmes interfaces (22, 24) pour la connexion de transmission de données (46, 60) vers l'unité d'interrogation et de commande à distance (44, 58), la troisième interface (22) étant une interface réalisée séparée et l'autre troisième interface (24) étant réalisée sous la forme d'une partie de la deuxième interface (20),
dans lequel il est possible, par le biais des troisièmes interfaces (22, 24) d'une part d'interroger à distance les données enregistrées par le capteur de position (34) et d'autre part, d'accéder à l'unité électronique d'exploitation (10) de sorte que la programmation de l'unité électronique d'exploitation (10) peut être réalisée à distance,
dans lequel la connexion de transmission de données (46) s'effectue par le biais de l'autre troisième interface (24) par la commande de machine (38) de sorte que la commande de machine (38) traite les données transmises pour commander le dispositif de préhension (30) de telle sorte qu'il ne peut pas se produire de modification ou de reprogrammation de la commande de machine (38) par l'interrogation à distance ou par la commande à distance.

2. Système de préhension selon la revendication 1, **caractérisé en ce que** la troisième interface de l'unité électronique d'exploitation (10) est réalisée sous la forme d'une unité à douilles et/ou d'une unité enfichable.

3. Système de préhension selon l'une des revendications précédentes, **caractérisé en ce que** la troisième interface (24) réalisée sous la forme d'une partie de la deuxième interface (20) de l'unité électronique d'exploitation (10) peut être raccordée à l'unité d'interrogation et de commande à distance (44, 58) par le biais d'une connexion de télécommunication. (46).

4. Système de préhension selon l'une des revendications précédentes, **caractérisé en ce que** l'unité électronique d'exploitation (10) et/ou l'unité d'interrogation et de commande à distance (44, 58) enregistre l'état de fonctionnement de l'unité électronique d'exploitation (10) en cas de dépassement des valeurs limites indiquées.

5. Système de préhension selon l'une des revendications précédentes, **caractérisé en ce que**, par le biais de l'unité d'interrogation et de commande à distance (44, 58), il est possible d'interroger ou d'entrer des valeurs d'interrogation et/ou de commande dans une unité de longueur.
